Europäisches Patentamt

European Patent Office

Office européen des brevets

(11) Publication number: **0 209 249**
**B1**

## EUROPEAN PATENT SPECIFICATION

(45) Date of publication of patent specification: **11.04.90**

(21) Application number: **86304560.5**

(22) Date of filing: **13.06.86**

(51) Int. Cl.⁵: **F 16 C 1/26, F 16 C 1/10**

(54) Automatic conduit anchorage device.

(30) Priority: **13.06.85 US 744846**

(43) Date of publication of application:
**21.01.87 Bulletin 87/04**

(45) Publication of the grant of the patent:
**11.04.90 Bulletin 90/15**

(84) Designated Contracting States:
**DE FR GB IT**

(56) References cited:
**US-A-1 822 259**
**US-A-2 181 657**
**US-A-2 424 757**
**US-A-4 131 379**
**US-A-4 337 971**

(73) Proprietor: **Acco Babcock Inc.**
**425 Post Road**
**Fairfield Connecticut 06430 (US)**

(72) Inventor: **Gilmore, William John**
**8346 Beach Road Manitou Beach**
**Michigan (US)**
Inventor: **Easter, Leland E.**
**1480 Moore Road Adrian**
**Michigan 49221 (US)**

(74) Representative: **Lewis, David Overington**
**Babcock International plc 217 Tabard Street**
**London SE1 4UR (GB)**

Courier Press, Leamington Spa, England.

## Description

This invention relates to an automatic conduit anchorage device and in particular to an anchorage device for use with a control cable assembly.

In the use of control cable assemblies having a casing and a core element axially translatable through the casing, it is necessary to anchor the casing so the core element may move relative to the casing. The casing is usually mounted in an opening through a wall or housing through which the cable assembly passes. For example, the control cable assembly may be used in automotive braking systems. In such a use, the casing or conduit would be mounted to the brake housing and the core would pass through the housing such that it is axially slidable relative to the casing. When the brake pedal end of the control cable is actuated by moving the core element relative to the casing, this motion is transmitted to the braking end of the control cable to apply the braking force.

US—A—4 131 379 discloses an automatic conduit anchorage device for anchoring a control cable conduit assembly through an opening in a support wall, including an elongate tubular body having a first shouldered end portion larger in size than the opening and arranged to abut one face of a wall surface adjacent an opening in a support wall and having a second end portion smaller in size than the opening and being provided with members resiliently biassed to engage the other face of the wall surface axially to locate the device in the opening.

By the present invention the members comprise locking pawl means positioned within axially extending slot means in the elongate body, the pawl means having a first end region with engagement means spaced from the first shouldered end portion of the body by a distance equal to a predetermined thickness of the support wall, a second end region spaced from the first end region, and a fulcrum edge situated between the first and second end regions bearing on a radially inner face of the slot means and about which the pawl means pivots from a locking position in which the first end region is raised radially outwardly of the slot means by a distance sufficient to facilitate locking of the pawl means against the support wall to effect anchoring of the anchorage device in relation to the opening and an open position permitting movement of the anchorage device through the opening, and a resilient biasing ring member for biasing the pawl means about the fulcrum and into the locking position engaging the pawl means between the fulcrum edge and the second end region thereof disposed in an annular groove extending circumferentially of the body and a matching groove in the pawl means to hold the pawl means against axial movement in the slot means.

US—A—2 181 657 discloses a bolt shank having pawls slidable and rockable in axial recesses in the shank arranged, by inter-action with a frusto-conical surface to be moved axially and outwardly after initially positioning the bolt shank in an opening. The requisite axial movement precludes use of such an arrangement in conjunction with a control cable conduit anchorage device.

An embodiment of the invention will now be described by way of example and with reference to the accompanying diagrammatic drawings in which:—

Figure 1 is a perspective view of the anchorage device according to invention inserted in an opening in a support wall together with a control cable assembly;

Figure 2 is a cross-sectional view of the anchorage device inserted in the opening in the support wall, and positioned in a locking position;

Figure 2A is a partial cross-sectional view of the anchorage device shown in Figure 2 positioned in an alternative locking position;

Figure 3 is a part sectional plan view taken along the line III—III of Figure 2; and

Figure 4 is a perspective view, to an enlarged scale of a locking pawl of the anchorage device.

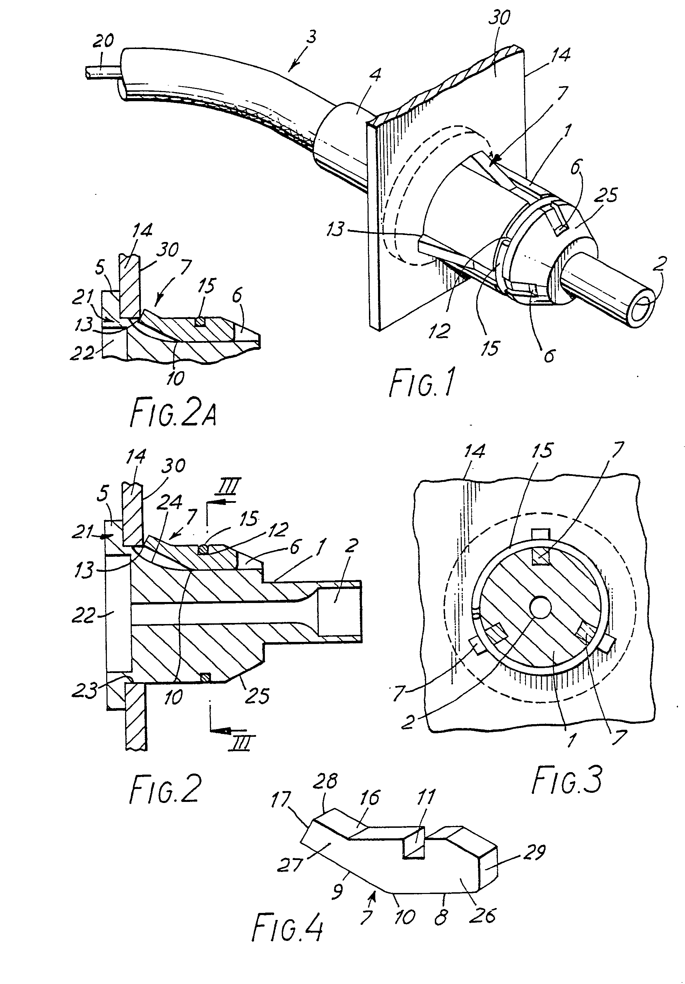

With reference to Figures 1 to 4 of the drawings the anchorage device includes an elongated tubular body 1 penetrated an axial passage 2. The passage 2 is adapted to slidably receive a core member 20 of a control cable assembly 3. A first end 21 of the body 1 is of relatively larger dimensions thn the remainder of the body 1, and includes an aperture 22 adapted to receive and hold a casing member 4 of the control assembly 3. The dimensions of the first end 21 produce a shoulder 5 which is of a relatively larger size radially in comparison to an opening 23 in a support wall 14 in which the anchorage device is to be mounted.

The body 1 includes three axially extending slots 6 in its outer surface, equally spaced about the circumference of the body. The slots 6 are formed with opposing sidewalls and a radially inner surface 24 which is curved towards the first end 21 of the body 6. Each slot 6 is adapted to receive a locking pawl 7. The body 1 also includes an annular groove 12 positioned adjacent a second, tapered, end 25 of the body 1.

Each of the pawls 7 has a base portion 26 having (in the orientation depicted in Figure 4) a bottom surface (8), the base portion 26 merging into a divergent arm portion 27 having a bottom surface 9 and a top camming surface 16. The arm portion 27 ends in a first end region 28 having an angle engaging surface 17, and the base portion 26 ends in a second end region 29.

The bottom surface 8 extends from the second end 29 of the pawl 7 for approximately one-half the overall length of the pawl 7, and the bottom surface 8 intersects bottom surface 9 of the arm portion 27 at approximately a 150° angle. In this way when the pawl 7 is positioned with its bottom surface 8 in face-to-face contact with the radially inner surface 24 of the slot 6 in a locking position the bottom surface 9 of the arm portion 27 is at a 30° angle to the radially inner surface 24 of the slot 6. Therefore the arm portion 27 of the pawl 7 diverges and extends away from and above the base portion 26. Because of its shape, the pawl 7 is able to rotate about a fulcrum edge 10 which is formed at the intersection of the bottom surfaces 8 and 9 between the first and second end regions 28, 29 of the pawl 7. The pawl 7 is rotatable through approximately 30° from the locking position to an open position where the bottom surface 9 is in face-to-face contact with the radially inner surface 24 of the slot 6. When in the open position, the arm portion 27 of the pawl 7 is received within slot 6 with the camming surface 16 spaced inwardly of the outer surface of the body 1.

Each pawl 7 is provided with a notch or groove 11 which matches the annular groove 12 provided in the surface of body 1. The location of grooves 11 and 12 thereby determines the clearance between an engaging edge 13 and the shoulder 5. The desired clearance is in turn determined by a predetermined thickness of the support wall 14 to which the anchorage device is to be mounted such that the clearance is equal to the predetermined thickness of the wall 14.

The notch 11 and annular groove 12 receive a spring snap ring 15. When the pawls 7 are positioned within slots 6 and the snap ring 15 is placed within the notches 11, located between the respective fulcrum edge 10 and the second end region 29 of the pawl 7 and the annular groove 12, each pawl is biased into the locking position by the radially inward compressive force of the snap ring 15, which causes the first end region 28 of the pawl 7 to be extended outwardly of the slot 6. At the same time each pawl 7 is held in its predetermined axial position relative to shoulder 5 by the presence of the snap ring 15 in the notches 11 and annular groove 12 preventing any axial motion of the pawl 7.

To install the anchorage device, the second end 25 of body 1 is introduced into the opening 23 in which the anchorage device is to be mounted. At this stage each pawl 7 is in the locking position. As the body 1 is inserted further, the walls of the opening 23 meet the camming surfaces 16 of the pawls 7 and force the pawls 7 to pivot about the fulcrum edge 10 so that the bottom surface 9 of the arm portion 27 is urged into face-to-face contact with the radially inner surface 24 of the slot 6. This causes the pawls 7 to move to the open position which permits the pawls 7 to pass through the opening 23 with minimal interference. The inward rotation of the arm portions 27 about the fulcrum edges 10 extends the snap ring 15 by outward rotation of the base portion 26 away from the body 1. As the body is inserted yet further, the pawls 7 clear the opening 23 and are biased back to the locking position by the action of the snap ring 15, thereby locking the pawls 7 against the support wall 14 to anchor the anchorage device in the opening. In the locking position the engaging surface 17 as shown in Figure 2 is in edge contact with a back surface 30 of the wall 14 and by cooperating with shoulder 5 prevents any axial motion of the anchorage device. The engaging surface 17 extends and rotates approximately tangentially about the fulcrum edge 10. In this way the engaging surface 17 is in line rather than face-to-face contact with the back surface of the wall 14. This alignment of the engaging surfaces 17 allows the pawls 7 partially to rotate back towards the locking position even if insertion is not fully complete and achieve anchorage of the device even when deviations in clearance or wall thickness restrict full return of the pawl to the locking position. This also eliminates the need for a resilient seat as part of the body 1.

Alternatively as is shown in Figure 2A, the engaging surface 17 may be arranged to engage a corner edge of the opening 23 where, for example, the opening 23 is too large for the first end region 28 of the pawl 7 to extend beyond the opening 23 or if the pawl 7 is restricted from fully achieving the locking position shown in Figure 2.

It should be noted that the body 1 may contain more or less than three slots with corresponding respective pawls.

The pawls 7 and the body 1 may be cast from zinc or other suitable material capable of withstanding repeated exposure to relatively high temperatures.

The body 1 is dimensioned so as to fit snugly within the opening in the support wall to aid in the reduction of dirt and other debris into, for example, a brake housing.

In a modification (not shown) the body 1 is provided with a longitudinal ridge for mating with a notch in the opening in the support wall to prevent rotation of the anchorage device once it is mounted.

## Claims

1. An automatic conduit anchorage device for anchoring a control cable conduit assembly through an opening in a support wall, including an elongate tubular body (1) having a first shouldered end portion (21) larger in size than the opening and arranged to abut one face of the wall surface adjacent an opening in a support wall (14) and having a second end portion (25) smaller in size than the opening and being provided with members (7) resiliently biased to engage the other face of the wall surface axially to locate the device in the opening, characterised in that the members comprise locking pawl means (7) positioned within axially extending slot means (6) in the elongate body (1), the pawl means (7) having a first end region (28) with engagement means (17) spaced from the first shouldered end portion (21) of the body by a distance equal to a predetermined thickness of the support wall, a second end region (29) spaced from the first end region (28), and a fulcrum edge (10) situated between the first and second end regions (28, 29) bearing on a radially inner face (24) of the slot means (6) and about which the pawl means (7) pivots from a locking position in which the first end region (28) is raised radially outwardly of the slot means (6) by a distance sufficient to facilitate locking of the pawl means (7) against the support wall to effect anchoring of the anchorage device in relation to the opening and an open position permitting movement of the anchorage device through the opening, and a resilient biasing ring member (15) for biasing the pawl means (7) about the fulcrum (10) and into the locking position engaging the pawl means (7) between the fulcrum edge (10) and the second end region (29) thereof disposed in an annular groove extending circumferentially of the body (1) and a matching groove (11) in the pawl means (7) surface to hold the pawl means (7) against axial movement in the slot means (6).

2. Automatic conduit anchorage device as claimed in Claim 1, characterized in that the slot means (6) includes three axially extending slots extending in the outer surface of the body (1) and disposed in equally spaced relation about the circumference thereof, and the pawl means (7) includes a separate pawl disposed in each of the axially extending slots (6).

3. Automatic conduit anchorage device as claimed in Claim 1 or Claim 2, characterized in that the pawl means (7) is of a dimension between the fulcrum edge (10) and the second end region (29) not to protrude outwardly of the slot means (6) when biased into the locking position.

4. Automatic conduit anchorage device as claimed in any preceding claim, characterized in that the pawl means (7) between the fulcrum edge (10) and the first end region (28) extends at an acute angle to the longitudinal axis of the body (1) to provide a camming surface (16) for engagement with the wall surface of the opening in the support wall as the anchorage device is inserted through the opening.

5. Automatic conduit anchorage device as claimed in any preceding claim, characterized in that the pawl means (7) includes a bottom surface having a portion thereof between the fulcrum edge (10) and the first end region (28) extending at an obtuse angle to a portion between the fulcrum edge (10) and the second end region (29).

6. Automatic conduit anchorage device as claimed in claim 5, characterized in that the two portions of the bottom surface of the pawl means (7) are flat surfaces extending at an angle of substantially 150° to each other.

**Patentansprüche**

1. Automatische Hüllenverankerungsvorrichtung zur Verankerung eines aus Steuerkabel und Hülle bestehenden Seilzuges durch eine Öffnung if einem Träger mit folgenden Merkmalen:
ein länglicher rohrförmiger Körper (1) weist ein erstes mit Schulter versehenes Endteil (21) auf, deren Größe die der Öffnung übersteigt und zur Anlage an einer Seite einer Wandoberfläche benachbart der Öffnung in der Trägerwand (14) angeordnet ist, und besitzt ein zweites Endteil (25), deren Größe kleiner als die der Öffnung ist und die mit nachgiebig vorgespannten Gliedern (7) versehen ist, um an der anderen Seite der Wandoberfläche axial anzuliegen, um die Vorrichtung in der Öffnung festzulegen,
gekennzeichnet durch folgende Merkmale:
die Glieder weisen Sperrklinkeneinrichtungen (7) auf, die in axial sich erstreckenden Schlitzeinrichtungen (6) in dem länglichen Körper (1) gelegen sind;
die Sperrklinkeneinrichtungen (7) besitzten einen ersten Endbereich (28), der mit Anlagemitteln (17) von dem ersten mit Schulter versehenen Endteil (21) des Körpers um einen Betrag gleich der vorbestimmten Dicke der Trägerwand entfernt angeordnet ist, ferner einen zweiten, von dem ersten Endbereich (28) im Abstand angeordneten Endbereich (29) und eine Drehkante (10), die zwischen dem ersten und dem zweiten Endbereich (28, 29) angeordnet ist und sich an einer radial inneren Fläche (24) der Schlitzeinrichtung (6) abstützt und um welche die Sperrklinken-;
einrichtung (7) schwenkt, und zwar von einer Verriegelungsstellung, in welcher der erste Endbereich (28) radial auswärts von der Schlitzeinrichtung (6) um einen Abstand angehoben ist, der ausreicht, die Verriegelung der Sperrklinkeneinrichtung (7) gegen die Trägerwand zu ermöglichen und die Verankerung der Verankerungsvorrichtung mit Bezug auf die Öffnung zu bewirken, und einer Öffnungsstellung, welche die Bewegung der Verankerungsvorrichtung durch die Öffnung ermöglicht;
die Glieder weisen ferner ein nachgiebig vorgespanntes Ringglied (15) auf, um die Sperrklinkeneinrichtung (7) um die Drehkante (10) und in die Verriegelung vorzuspannen, in dem die Sperrklinkeneinrichtung (7) zwischen der Drehkante (10) und dem zweiten Endbereich (29) ergriffen wird, wobei das Ringglied in einer sich in Umfangsrichtung des Körpers (1) erstreckenden Ringnut und einer damit übereinstimmenden Nut (11) in der äußeren Oberfläche der Sperrklinkeneinrichtung (7) angeordnet ist, um die Sperrklinkeneinrichtung (7) gegen axiale Bewegung in der Schlitzeinrichtung (6) zu halten.

2. Automatische Hüllenverankerungsvorrichtung nach Anspruch 1, dadurch gekennzeichnet, daß die Schlitzeinrichtung (6) drei axial sich erstreckende Schlitze umfaßt, die sich in der äußeren Oberfläche des Körpers (1) erstrecken und in gleichem Winkelabstand um den Umfang herum verteilt angeordnet sind, und daß die Sperrklinkeneinrichtung (7) eine getrennte Klinke in jedem der sich axial erstreckenden Schlitze (6) aufweist.

3. Automatische Hüllenverankerungsvorrichtung nach Anspruch 1 oder 2, dadurch gekennzeichnet, daß die Sperrklinkeneinrichtung (7) zwischen der Drehkante (10) und dem zweiten Endbereich (29) so bemessen ist, daß sie nicht aus der Schlitzeinrichtung (6) hervorsteht, wenn sie in die Verriegelungsstellung vorgespannt ist.

4. Automatische Hüllenverankerungsvorrichtung nach einem der vorhergehenden Ansprüche, dadurch gekennzeichnet, daß die Sperrklinkeneinrichtung (7) zwischen der Drehkante (10) und dem ersten Endbereich (28) sich im spitzen Winkel zur Längsachse des Körpers (1) erstreckt, um eine Nockenfläche (16) zum Eingriff mit der Wandoberfläche der Öffnung in der Trägerwand zu bilden, wenn die Verankerungsvorrichtung durch die Öffnung eingefügt wird.

5. Automatische Hüllenverankerungsvorrichtung nach einem der vorhergehenden Ansprüche, dadurch gekennzeichnet, daß die Sperrklinkeneinrichtung (7) eine Bodenoberfläche aufweist, deren Teilbereich zwischen der Drehkante (10) und dem ersten Endbereich (28) sich in einem stumpfen Winkel zu dem Teilbereich zwischen der Drehkante (10) und dem zweiten Endbereich (29) erstreckt.

6. Automatische Hüllenverankerungsvorrichtung nach Anspruch 5, dadurch gekennzeichnet, daß die beiden Teilbereiche der Bodenoberfläche der Sperrklinkeneinrichtung (7) ebene Oberflächen sind, die sich in einem Winkel von im wesentlichen 150° zueinander erstrecken.

**Revendications**

1. Dispositif d'ancrage à tube automatique pour ancrer un assemblage de tube de câble de commande par une ouverture dans une paroi de support, comprenant un corps tubulaire allongé (1) comportant une première portion d'extrémité à épaulement (21) de plus grande taille que l'ouverture et agencée pour buter contre un côté d'une surface de paroi adjacente à une ouverture dans une paroi de support (14) et comportant une seconde portion d'extrémité (25) de plus petite taille que l'ouverture et étant dotée d'éléments (7) inclinés de manière élastique pour engager l'autre côté de la surface de paroi axialement afin de placer le dispositif dans l'ouverture, caractérisé en ce que les éléments comprennent des cliquets de verrouillage (7) situés à l'intérieur de fentes (6) s'étendant axialement dans le corps allongé (1), les cliquets (7) comportant une première zone d'extrémité (28) avec des moyens d'engagement (17) espacés de la première portion d'extrémité à épaulement (21) du corps d'une distance égale à une épaisseur prédéterminée de la paroi de support, une seconde zone d'extrémité (29) espacée de la première zone d'extrémité (28), et un bord d'appui (10) situé entre la première et seconde zone d'extrémité (28, 29) portant sur une surface interne radialement (24) de la fente (6) et selon lequel les cliquets (7) pivotent à partir d'une position de verrouillage où la première zone d'extrémité (28) est soulevée radialement vers l'extérieur de la fente (6) d'une distance suffisante pour faciliter le verrouillage des cliquets (7) contre la paroi de support afin d'effecuer l'ancrage du dispositif d'ancrage relativement à l'ouverture et une position ouverte permettant le déplacement du dispositif d'ancrage par l'ouverture, et un anneau de sollicitation élastique (15) pour incliner les cliquets (7) selon le bord d'appui (10) et dans la position de verrouillage engageant les cliquets (7) entre leur bord d'appui (10) et leur seconde zone d'extrémité (29) disposés dans une gorge annulaire s'étendant sur la circonférence du corps (1) et une gorge correspondante (11) dans la surface extérieure des cliquets (7) pour empêcher ces derniers de ce déplacer axialement dans les fentes (6).

2. Dispositif d'ancrage à tube automatique selon la revendication 1, caractérisé en ce que les fentes (6) consistent en trois fentes s'étendant axialement dans la surface externe du corps (1) et disposées équidistances sur sa circonférence, et les cliquets (7) consistent en des cliquets distincts disposés dans chacune des fentes s'étendant axialement (6).

3. Dispositif d'ancrage à tube automatique selon la revendication 1 ou 2, caractérisé en ce que les cliquets (7) sont d'une dimension entre le bord d'appui (10) et la seconde zone d'extrémité (29) pour ne pas faire saillie vers l'extérieur des fentes (6) lorsqu'ils sont inclinés dans la position de verrouillage.

4. Dispositif d'ancrage à tube automatique selon l'une quelconque des revendications précédentes, caractérisé en ce que les cliquets (7) entre le bord d'appui (10) et la première zone d'extrémité (28) s'étendant à angle aigu relativement à l'axe longitudinal du corps (1) afin de fournir une surface en saillie (16) pour engagement avec la surface de paroi de l'ouverture dans la paroi de support lorsque le dispositif d'ancrage est inséré par l'ouverture.

5. Dispositif d'ancrage à tube automatique selon l'une quelconque des revendications précédentes, caractérisé en ce que les cliquets (7) comprennent une surface inférieure comportant une portion entre le bord d'appui (10) et la première zone d'extrémité (28) s'étendant à angle obtus relativement à une portion entre le bord d'appui (10) et la seconde zone d'extrémité (29).

6. Dispositif d'ancrage à tube automatique selon la revendication 5, caractérisé en ce que les deux portions de la surface inférieure des cliquets (7) sont des surfaces plates s'étendant à un angle de substantiellement 150° l'une par rapport à l'autre.

FIG.1

FIG.2A

FIG.2

FIG.3

FIG.4